# EUROPEAN PATENT APPLICATION

(11) **EP 3 885 056 A1**
(43) Date of publication of application: **29.09.2021**
(21) Application number: 21160129.9
(22) Date of filing: 02.03.2021
(51) Int. Cl.: B08B 5/04, B08B 5/02, B08B 3/02, B41F 23/00, A47L 9/02, D21F 7/00, D21G 9/00

(54) **SYSTEM FOR SUCTIONING DUST AND FIBRILS**

(30) Priority: 03.03.2020 IT 202000004462; 11.03.2020 IT 202000005212; 01.12.2020 IT 202000029333
(71) Applicant: Canalair Service S.r.l., 24028 Ponte Nossa BG (IT)
(72) Inventor: BOSIO, Fabio, 24028 Ponta Nossa (IT)
(74) Representative: Plischke, Manfred

(57) **Abstract**

A system for suctioning dust and fibrils from a moving web comprising: a suction system; a suction manifold being connected to the suction system; the manifold comprising at least one suction nozzle; the manifold being arranged crossways to the moving web; characterized by the fact that the manifold includes a device for adjusting the distance between the at least one suction nozzle and the web; a roller opposed to the at least one suction nozzle on which the web is made to run. (Fig. 1)

## Description

### Field of the invention

The present invention relates to a system for suctioning dust and fibrils from a moving web and to a related method for the suctioning of dust and fibrils from moving webs. In particular, it relates to a suction manifold for suctioning dust and fibrils from fabrics, paper, non-woven fabrics, and any film or web during production and winding into rolls.

The suction system applies to webs of hygienic, medical, personal-care, homecare type, and other types.

### Background

On the webs produced by production lines of non-woven fabrics, paper, tissue, and others, are dust and fibrils in more or less large amounts according to the characteristics of the product made.

During the winding of the product onto a reel and possibly also during the rewinding or subsequent processing phase, processing may involve continuous longitudinal cuts of the product itself with the consequent further formation of dust and fibrils.

During the winding phase on the reel, part of these dust and fibrils, through the centrifugal force deriving from the winding up of the product, come off and are diffused in the air, thereby polluting the surrounding areas.

This creates breathable dust, working areas become dirty, and dust and fibrils are deposited on all the component parts of the production line.

The portion of these dust and fibrils that do not come off the surfaces and remain on the product itself create significant problems during subsequent processing phases.

This is a very critical issue for manufacturers, especially those who make a finished product for the hygiene and medical sector.

As is known, to limit dust and fibrils from the webs, suction systems exist with one or more suctioning manifolds.

The suction manifolds are as long as the width of the web on which suction is performed and the Applicant has noticed that the nozzles on the market are not able to ensure constant suction along the whole length and as a consequence the quality of product cleaning is not constant along the whole width of the web.

In particular, when the web is then cut into longitudinal strips, rolls of web with different levels of quality are obtained despite being derived from the same web.

The object of the present invention is to provide a more efficient system for the suctioning of dust and fibrils from webs.

A further object is to provide a suction system able to suction larger amounts of dust and fibrils.

Another object is to provide an adjustable suction system able to adapt to any particular situation.

A further object is to provide a suction system able to maintain constant suction across the entire width of the web.

Another object is to provide a suction system able to limit web contamination.

### Summary

In a first aspect, the present invention is system for suctioning dust and fibrils from a moving web, the suctioning system comprising:
- a suction system;
- a suction manifold being connected to the suction system;
- the manifold comprising at least one suction nozzle;
the manifold being arranged cross-directionally to the moving web; characterized by the fact that the manifold includes a device for adjusting the distance between the at least one suction nozzle and the web;
- a roller opposed to the at least one suction nozzle on which the web is made to run.

The suction manifold of the suctioning system may further two fixing plates for fastening the manifold to the supporting structure of the production line, by means of a device which permits adjusting the distance between the suction manifold and the web.

Optionally, the internal section of the manifold is variable, passing from a first internal diameter present in the outermost position of the manifold, to a second internal diameter distal from the first diameter, wherein the first diameter is greater than the second diameter.

Optionally, the manifold may comprise a first suction nozzle and a second suction nozzle, and the opening of the first nozzle and/or of the second nozzle may have a variable width.

The suctioning system may comprise
- an air recovery and humidification system which comprises a filtration unit associated with the suction manifold;
- a heating, ventilation and air conditioning unit connected to the outlet of the filtration unit, whereby the heating, ventilation and air conditioning unit may be connected to a diffuser.

The suctioning system may further comprise a sensor for measuring the amount of dust present at the outlet of the suction manifold.

Optionally, the suction manifold may be positioned in the proximity of the web to be cleaned and may be fastened with at least one fixing plate to the supporting structure of the production line, further comprising micrometrical screws joining the at least one fixing plate to the supporting structure adapted to adjust the distance between the suction manifold and the web.

In another aspect, the present invention is a method for suctioning dust and fibrils from a moving web comprising the steps of:
- providing a moving web;
- connecting a suction manifold to a suction system, wherein the manifold comprises at least one suction nozzle;
- placing the manifold cross-directionally to the moving web; the method being characterized by further comprising the step of adjusting the distance between the at least one suction nozzle and the web by an adjustment device;
- placing a roller opposed to the at least one suction nozzle and running the web over the roller.

The advantages of this solution with respect to prior art solutions are several.

Thanks to the present invention, it is possible to drastically reduce the pollution in the production premises and of the manufactured product.

The presence of two adjustable plates makes it possible to place them in the best position, depending on the material treated, thus increasing suctioning efficiency.

### Brief description of the drawings

The characteristics and advantages of the present invention appear evident from the following detailed description of a practical embodiment thereof, illustrated by way of non-exclusive example on the accompanying drawings, wherein:

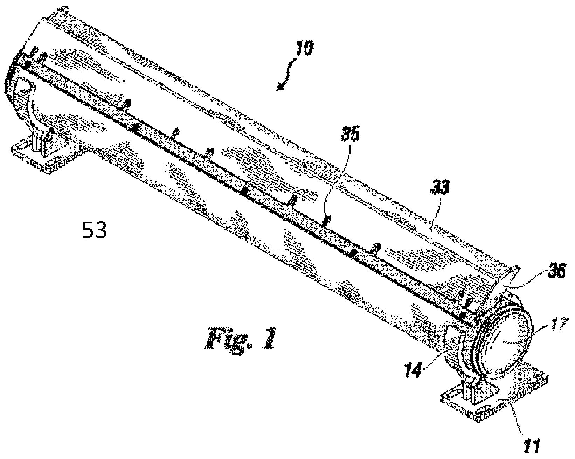

Figure 1 shows an axonometric projection of a suction manifold for suctioning dust and fibrils from moving webs, viewed from a first side, in accordance with the present invention.

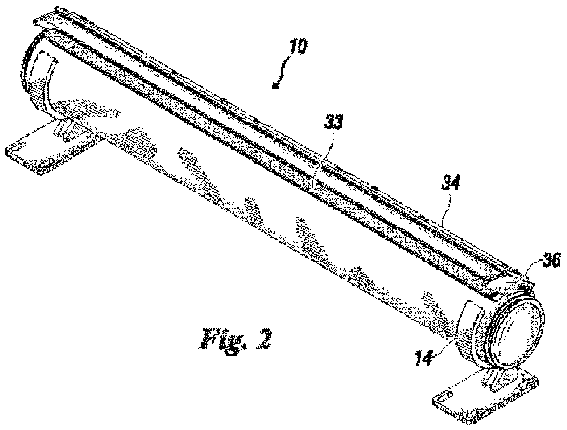

Figure 2 shows an axonometric projection of a suction manifold for suctioning dust and fibrils from moving webs, viewed from a second side, in accordance with the present invention.

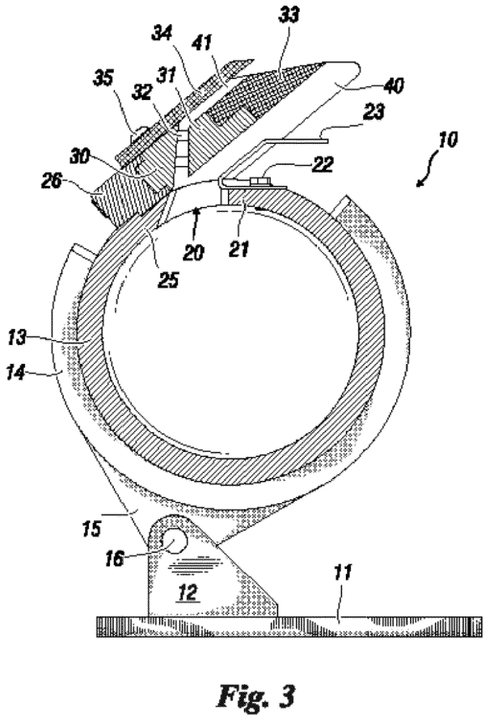

Figure 3 shows a cross-section view of a suction manifold for suctioning dust and fibrils from moving webs in accordance with the present invention.

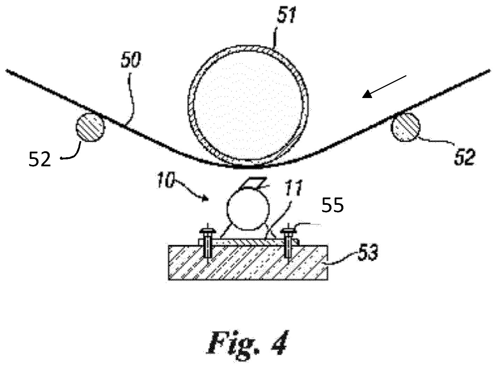

Figure 4 shows a cross-section view of a suction manifold for suctioning dust and fibrils from moving webs in accordance with the present invention.
Figures 5a and 5b show two extreme diameters (in section) of a suction manifold for suctioning dust and fibrils from moving webs, in accordance with the present invention.
Figure 6 shows a variable profile of a suction nozzle of a suction manifold for suctioning dust and fibrils from moving webs, in accordance with the present invention.
Figure 7 shows a system for recovering and humidifying the suction air of a suction manifold for suctioning dust and fibrils from moving webs, in accordance with the present invention.

### Detailed Description

With reference to the attached illustrations, a system for suctioning dust and fibrils from moving webs in accordance with the present invention includes a suction system to which at least one suction manifold 10 is connected.

The suction manifold 10 is positioned in the proximity of the web which has to be cleaned and is fixed by means of at least one fixing plate 11 to the supporting structure 53 of the production line.

Each fixing plate 11 includes a fin 12 having a hole.

The suction manifold 10 comprises a suctioning manifold 13 having a substantially tubular shape.

Attached to the suctioning manifold 13 are at least two circumferential arc cradles 14 entailing a circular sector featuring an angle greater than 180° and preferably equal to 260°.

The cradles 14 comprise a fin 15 having a hole.

The hole in the fin 12 and the hole in the fin 15 are aligned and a pin 16 secures in a rotatable way (around the pin 16) the fixing plate 11 with the suctioning manifold 13 retained by the cradles 14.

The suctioning manifold 13 is connected to the suction system by extra-strong, low pressure drop hoses (not shown), preferably fastened to it laterally, to a connector 17 located at both ends of the manifold 13. The suction system may be connected to the manifold 13 only on one side (and the other side is closed) of the manifold itself or on both sides, depending on the suction power to be achieved.

In accordance with the present invention, the internal cross-section of the manifold 13 is variable so as to maintain constant suction along the entire length of the manifold 13.

The internal cross-section of the manifold 13 is variable, changing from a first internal diameter 48 which is that of the connector 17, i.e., the one in the outermost position of the manifold 13, to a second internal diameter 49 distal to the connector 17, where the first diameter 48 is greater than the second diameter 49. The variation in diameter (diameter decrease), between the first diameter and the second diameter occurs proportionally to the distance from the extremity of said manifold, where the connector 17 is located.

Preferably, the variation is a linear variation.

The diameter decrease in moving away from the extremity of the manifold 13, where the suction system is connected to the connector 17, permits achieving constant suction along the entire manifold 13, and therefore constant suction.

In case of connection to the suction system on only one side of the manifold 13 there will be only one diameter variation. In case of connection of the manifold 13 to the suction system on both sides of the manifold 13, there will be two variations (decreases) of diameter, one starting from one side and one starting from the other side.

The values of the first diameter and of the second diameter as well as the value of the profile of the diameter variation depend on the length of the manifold and on the suction pressures (vacuum) involved and can be calculated in a known way.

The suctioning manifold 13 includes a longitudinal opening 20, as long as the suctioning manifold 13, located in the circular sector left free by the cradles 14. On a first edge 21 of the opening 20 is fixed with screws 22 a profile 23, as long as the opening 20, having in sectional shape made up of three linear portions, connected to each other and having the two end portions parallel to each other and an intermediate portion, joining the end portions, inclined at an angle of about 45° with reference to the end portions.

The first edge 21 is preferably leveled to facilitate fastening the profile 23.

The screws 22 are inserted into corresponding slots in the profile 23 to permit adjusting the positioning of the profile 23.

On a second edge 25 of the opening 20, a first longitudinal rod 26 as long as the opening 20 is fixed in a stable way (for example by welding).

A second longitudinal rod 30 is fixed onto the rod 26 using screws.

On the second rod 30 a third rod 31 finds room, fixed by means of screws 32. On the third rod 31 a fourth rod 33 finds room, fixed by means of screws.

The second rod 30 supports a fifth rod 34 on its outer surface by means of screws 35.

At the side extremities of the suctioning manifold 13, the elements 26, 30, 31, 33, 34 are closed by plates 36.

The above-described elements 26, 30, 31, 33, 34 are arranged to form a first suction nozzle 40 and a second suction nozzle 41, connected to the longitudinal opening 20 and thus to the suctioning manifold 13.

In particular, the first nozzle 40 is delimited, along the entire longitudinal opening 20, on one side by the profile 23 and on the other side by the third rod 31 including the fourth rod 33. The second nozzle 41 is delimited, along the entire longitudinal opening 20, on one side by the third rod 31 including the fourth rod 33, and on the other side by the fifth rod 34 and by the second rod 30.

The first nozzle 40 is rectilinear up to the longitudinal opening 20. The profile 23 comprises the intermediate part parallel to the assembly made up of the third rod 31 and of the fourth rod 33, and in particular is opposed to the third rod 31, and has a length of about half of the assembly made up of the third rod 31 and the fourth rod 33. The end part opposed to the screws 22, is inclined outwards and a suction nozzle 40 is thus created having a very wide mouth.

The second nozzle 41, initially and externally, is rectilinear and parallel to the third rod 31 and to the fourth rod 33, until it meets the second rod 30 which provides a bend (at an angle of about 135°) to join up to the longitudinal opening 20.

An inner edge of the third rod 31 is located in opposite to the longitudinal opening 20 and is the point of convergence between the first nozzle 40, the second nozzle 41 and the longitudinal opening 20. The first nozzle 40 and the second nozzle 41 are preferably parallel to each other at least in their portion closest to the moving web.

The outer extremities of the fourth rod 33 and of the fifth rod 34 are on one side flat and on the other side inclined to form a blade with a chisel bevel. The edge of the bevel is positioned opposed to the direction of movement of the web. The third rod 31 and the fourth rod 33 form what may be termed a main scraper and the fifth rod 34 a secondary scraper.

These and the intermediate part of the profile 23 are inclined with respect to the tangent to the opening 20 by about 30°.

The suctioning system also comprises a roller 51 opposed to the suction manifold 10, and arranged crossways to the moving web like the suction manifold 10, over which the web 50 is made to run. The web 50 reaches the roller 51 with an angle so that it rests on and runs over the roller 51 in a stable way, and must be tensioned so that, during the movement of the web 50, it does not become detached from the roller 51.

The angle at which the web reaches the roller 51 may be between 1° and 90°. The angle at which the web leaves the roller 51 may be between 1° and 90°. The arrival and departure tensioning and/or inclination of the web 50 on the roller 51 can be performed by means of two further rollers 52 placed on the other side of the web 50, upstream and downstream of the roller 51.

The roller 51 can have the dimension most appropriate for the case in question, and can rotate idle, can be stationary or can be motor driven. The choice must be made according to the movement speed of the web 50, the type of material of the web 50, and the arrival and departure inclination of the web 50.

The two fixing plates 11 are fastened to the supporting structure 53 of the production line, not shown, by means of a device 55 which permits adjusting the distance between the supporting structure 53 and the suction manifold 10, and therefore between the suction manifold 10 and the web 50, and more in particular between the nozzles 40 and 41 and the web 50.

The device 55 can be made in various ways, and the distance can be adjusted, for example, by means of screws and nuts 56, more preferably by means of micrometrical screws, which join the plates 11 to the supporting structure 53.

This way, the web 50 passes over the roller 51 stably without fluttering, and the suction nozzles 40 and 41 can come as close as desired to the web 50 without touching it. The distance between the suction nozzles 40 and 41 and the web 50 is less than 5 mm, preferably less than 3 mm, more preferably less than 2 mm, and can be reduced to 1 mm without contact problems.

All the parts of the system are preferably made of aluminum with the exception of the fourth rod 33 and of the fifth rod 34 which are preferably made of polyethylene. Other metallic or non-metallic materials may be used.

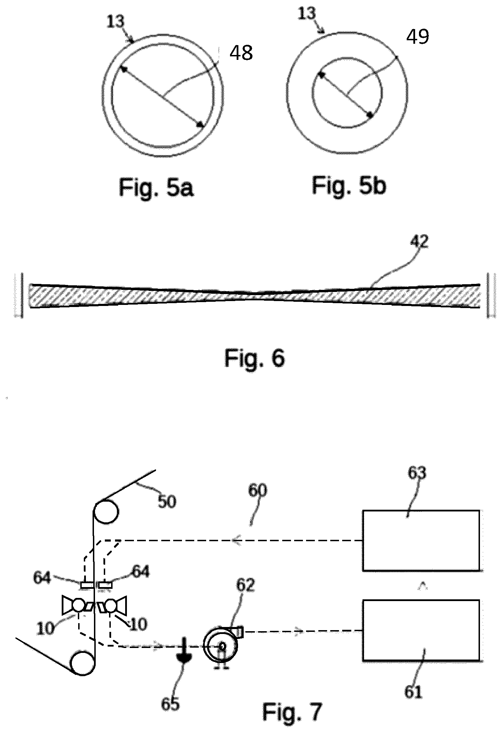

As an alternative to the diameter variation of the suctioning manifold 13, again in order to maintain constant suction over the entire suction length, use is preferably made of a variable profile of the first nozzle 40 and/or of the second nozzle 41, so as to have an opening, the width of which is variable, preferably linearly, see Fig. 6. In an example of embodiment, the second nozzle 41 has a symmetrically variable profile 42 which is wider at the sides and narrower in the center.

The suctioning system preferably comprises a system 60 for recovering and humidifying the suctioned air and putting it back into circulation.

The suctioned air coming from the connector 17 of the suction manifold 10, which may be more than one, as shown for example in the illustrations, see Fig. 7 (with roller omitted), where there is one on each side of the web 50, is sent to a filtration unit 61 by means of a fan 62. The filtered air coming out of the filtration unit 61 is sent to an air heating, ventilation and conditioning unit 63, which humidifies the air and brings it to ambient temperature before introducing it into the environment in the proximity of the suction manifold 10, by means of one or more diffusers 64.

With this air recovery and humidification system, the suctioned air is recovered and brought back to the desired humidity and temperature (that of the environment) without requiring new air which would affect the ambient conditioning system.

Along the path of the air suctioned from the suction manifold 10 to the filtration unit 61, upstream or downstream of the fan 62, a dust measuring device 65 can be fitted, e.g., by means of an opacimeter or other sensors suitable for the purpose.

The sensor 65 can be fitted to the dust suction system, at the outlet of the suction manifold, even without the presence of the system 60 for the recovery and humidification of the suctioned air.

The use of such a sensor permits measuring the quantity of suctioned dust and using this data as a feedback of the system and also as an index of the quality of the operation.

The operation of the invention is evident to the technician in the field from what has been described and in particular is as follows.

The suction manifold 10 is fastened to the supporting structure 53 of the production line, by means of the plates 11.

The suction manifold 10, and in particular the suction nozzles 40 and 41 are positioned at the desired distance from the web 50 by adjusting the device 55. The suctioning manifold 13 is made to rotate around the pin 16 in order to position the suction nozzles 40 and 41 in the desired position and at the desired angle.

Normally, the suctioning manifold 13 is fixed so that the two scrapers are inclined at an angle between 0° and 80°, and more preferably between 0° and 40° with reference to the surface of the web.

In particular, the fourth rod 33, i.e. the main scraper, is positioned opposed to the direction of movement of the web to be cleaned and is positioned either level with or in contact with the web. The fifth rod 34 is adjusted by fixing the screws 35 which are inserted into corresponding slots in the rod 34 so that the secondary scraper is positioned level with or in contact with or free from the web.

For the profile 23 as well, the distance from the third rod 31 is regulated by means of the screws 22, which are inserted in corresponding slots of the edge 21, in order to have a width of the first suction nozzle 40 suitable for the suction to be obtained.

At this point the operation is started by setting the web in motion and starting the suction system.

The main claw 33, by means of its suction nozzle 40, will have the task of removing from the web the particles (dust and fibrils) in suspension; if level, the scraper will have both the task of stopping all the material in suspension and conveying it to the main suction nozzle 40 which has the task of removing all the material that remains in close contact with the web.

The first suction nozzle 40 will have the task of suctioning the material which is detached by the main claw 33, while the secondary claw 34 will have the task of containing and stopping all the material loosened and detached by the operation of the main claw 33 and having it suctioned by the second suction nozzle 41.

Both the main air nozzle 40 and the secondary air nozzle 41 may vary in terms of width so as to be able to vary the suction capacity according to the suctioned product, to the working speed, and to web tensioning.

The dimensions of the manifold may vary according to the width of the web to be cleaned and may have a length ranging from a minimum of 100 mm to a maximum of 7000 mm; according to the suctioning air flow rate, the suctioning manifold may have a minimum diameter of 60 mm and a maximum diameter of 600 mm.

The system thus conceived is susceptible to many modifications and variants, all falling within the scope of the invention concept; moreover, all details can be replaced by technically equivalent elements.

For example, the device 55, which permits adjusting the distance between the suction manifold 10 and the web 50, can also be fitted on manifolds with only one air nozzle, instead of two, and on manifolds with air nozzles of different shape and embodiment.

## Claims

1. A system for suctioning dust and fibrils from a moving web (50) comprising:
- a suction system;
- a suction manifold (10) being connected to said suction system;
- said manifold (10) comprising at least one suction nozzle (40, 41);
said manifold being arranged cross-directionally to said moving web (50);
**characterized by** the fact that said manifold (10) includes a device (55) for adjusting the distance between said at least one suction nozzle (40, 41) and said web (50);
a roller (51) opposed to said at least one suction nozzle (40, 41) on which said web (50) is made to run.

2. System according to claim 1, further **characterized by** the fact that said manifold (10) comprises two fixing plates(11) for fastening said manifold to the supporting structure (53) of the production line, by means of a device which permits adjusting the distance between said suction manifold (10) and said web (50).

3. System according to claim 1 or 2, further **characterized by** the fact that the internal section of said manifold (10) is variable, passing from a first internal diameter (48) present in the outermost position of said manifold, to a second internal diameter (49) distal from said first diameter, wherein said first diameter (48) is greater than said second diameter (49).

4. System according to any of the preceding claims, further **characterized by** the fact that said manifold comprises a first suction nozzle (40) and a second suction nozzle (41).

5. Systemaccording to claim 4, further **characterized by** the fact that the opening of said first nozzle (40) and/or of said second nozzle (41) has a variable width.

6. System according to any of the preceding claims, further **characterized by** the fact that it comprises a recovery and humidification system (60) which comprises a filtration unit (61) associated with said suction manifold (10); a heating, ventilation and air conditioning unit (63) is connected to the outlet of said filtration unit (61); said heating, ventilation and air conditioning unit is connected to a diffuser.

7. System according to any of the preceding claims, further **characterized by** the fact that it comprises a sensor (65) of the amount of dust present at the outlet of said suction manifold.

8. System according to claim 2, further **characterized by** the fact that said suction manifold (10) is positioned in the proximity of the web (50) to be cleaned and is fastened with at least one fixing plate (11) to the supporting structure of the production line, whereby the distance between said suction manifold (11) and said web (50) can be adjusted by means of micrometrical screws joining said at least one fixing plate to said supporting structure.

9. Method for suctioning dust and fibrils from a moving web comprising the steps of:
- providing a moving web (50);
- connecting a suction manifold (10) to a suction system, wherein said manifold comprises at least one suction nozzle (40, 41);
- placing said manifold (10) cross-directionally to said moving web (10; said method being **characterized by** further comprising the step of adjusting the distance between said at least one suction nozzle and said web by an adjustment device;
- placing a roller opposed to said at least one suction nozzle and running said web over said roller.
